# EUROPEAN PATENT APPLICATION

(11) **EP 2 566 020 A2**
(43) Date of publication of application: **06.03.2013**
(21) Application number: 12179664.3
(22) Date of filing: 08.08.2012
(51) Int. Cl.: H02K 37/10

(54) **Hybrid rotary electrical machine**

(30) Priority: 27.08.2011 JP 2011185360
(71) Applicant: Nidec Servo Corporation, Kiryu-city, Gumma 376-0011 (JP)
(72) Inventor: Nguyen, Thanh Trung, Gumma, 376-0011 (JP); Kikuchi, Noriyoshi, Gumma, 376-0011 (JP)
(74) Representative: Zimmermann, Tankred Klaus

(57) **Abstract**

A hybrid rotary electrical machine that obtains a deviation angle of about one half of a pole teeth pitch between magnetic teeth of two rotor magnetic pole members gripping a permanent magnet of a rotor including rotor magnetic pole members that include the magnetic teeth at an equal pitch T on a surface thereof. The rotor magnetic pole members include cutout portions on the inner circumferential surface or the outer circumferential surface of the rotor magnetic pole members in a specified positional relationship with respect to the magnetic teeth. The cutout portions of one of the rotor magnetic pole members are axially aligned with the cutout portions of the other rotor magnetic pole member turned upside down so the magnetic teeth of one of the rotor magnetic pole members have a phase difference of about T/2 with respect to the magnetic teeth of the other rotor magnetic pole member.

## Description

### BACKGROUND OF THE INVENTION

### 1. Field of the Invention

The present invention relates to a hybrid rotary electrical machine, e.g., a stepping motor, which includes a stator including winding multiphase coils on a plurality of main poles as winding poles and a hybrid rotor provided by interposing a permanent magnet between a pair of rotor magnetic pole members.

### 2. Description of the Related Art

In a rotary electrical machine such as a stepping motor or the like extensively used in an office automation device such as a copier or a printer, a demand exists for size reduction, cost-effectiveness and high-speed high-torque low-vibration rotation. The office automation device tends to become small-sized, cost-effective, high in speed and low in vibration. Similarly, size reduction, cost-effectiveness, high speed and low vibration are required in a drive motor for the office automation device. As one way for complying with such a demand, there is available a hybrid stepping motor.

In the hybrid stepping motor, a rotor includes two disc-shaped rotor magnetic pole members (rotor cores) and an axially-magnetized permanent magnet arranged between the rotor magnetic pole members. The rotor is attached to a rotating shaft. A stator core is arranged outward of the rotor so as to surround the rotor. Casings are arranged at the axial opposite ends of the stator core. The rotating shaft is rotatably supported by bearings held in the casings. A plurality of main poles is formed in the stator core to protrude inward. Coils are wound on the main poles. The supply of electric power to the coils is controlled by a drive circuit to thereby obtain desired rotation of the rotor. In this regard, a plurality of inductor teeth is formed at the tip ends of the respective main poles of the stator core. On the outer circumferential surfaces of the respective rotor poles of the rotor, a plurality of magnetic teeth is formed in an opposing relationship with the inductor teeth of the stator.

In the hybrid stepping motor stated above, when the inductor tooth of an arbitrary stator main pole is exactly opposed to the magnetic tooth of one rotor magnetic pole member of the rotor, it is a necessary condition that the magnetic tooth of the other rotor core be deviated from the inductor tooth by one half of the pitch of the rotor magnetic teeth. In the prior art, therefore, one pair of the rotor magnetic pole members of the rotor is arranged with a deviation by one half of the pitch of the magnetic teeth.

In the past, the assembly and manufacture of the rotor was performed through the use of a dedicated jig by holding the rotor magnetic teeth and the rotor magnetic pole members at the outside in order to obtain a deviation angle of one half of a pole teeth pitch between the magnetic teeth of two rotor magnetic pole members gripping the permanent magnet of the rotor. However, this poses a problem in that it is difficult to accurately set the deviation angle of the magnetic teeth between the rotor magnetic pole members. This problem is manifested particularly in a small-size hybrid stepping motor, leading to a torque variation, a torque reduction and a low angular accuracy.

### SUMMARY OF THE INVENTION

Preferred embodiments of the present invention provide a hybrid rotary electrical machine capable of obtaining, with a simple configuration, a deviation angle of one half of a pole teeth pitch between the magnetic teeth of two rotor magnetic pole members gripping a permanent magnet of a rotor.

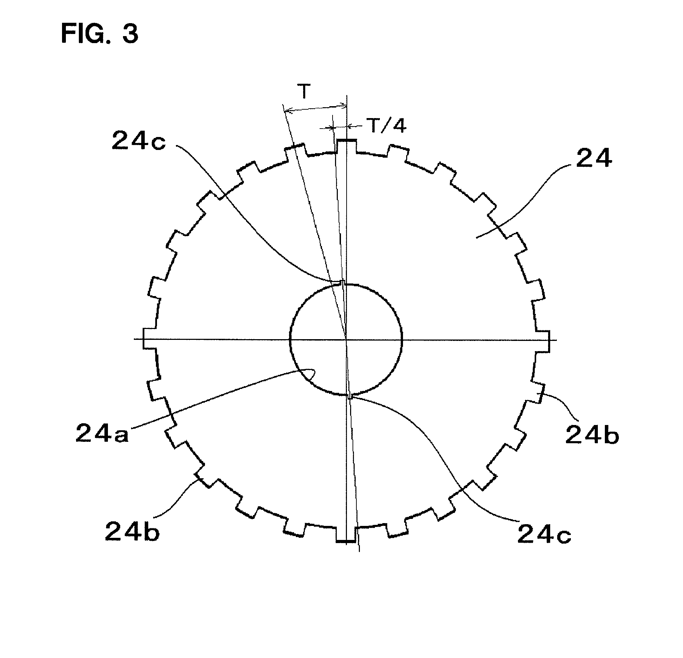

In accordance with a preferred embodiment of the present invention, a hybrid rotary electrical machine includes: a stator including a stator core including an annular core-back portion and a plurality of main poles radially protruded from the core-back portion, each of the main poles including a plurality of inductor teeth provided at a tip end thereof, the stator further including multi-phase coils wound on the main poles of the stator core; and a rotor including one or more rotor elements, the rotor elements including a pair of annular rotor magnetic pole members made of a magnetic material and an axially-magnetized annular permanent magnet interposed between the annular rotor magnetic pole members, the rotor magnetic pole members being rotatably arranged with respect to the stator with a radial air gap left therebetween, wherein each of the rotor magnetic pole members includes a specified number of magnetic teeth arranged at an equal pitch T (as shown in Fig. 3, the pitch T corresponds to an angle between center portions of adjacent teeth of a rotor magnetic pole member) on an inner circumferential surface or an outer circumferential surface thereof facing the stator, the rotor magnetic pole members being arranged such that the magnetic teeth of one of the rotor magnetic pole members are deviated by about T/2 from the magnetic teeth of the other rotor magnetic pole member, each of the rotor magnetic pole members includes cutout portions provided on the inner circumferential surface or the outer circumferential surface of each of the rotor magnetic pole members in a specified positional relationship with respect to the magnetic teeth, and the cutout portions of one of the rotor magnetic pole members are axially aligned with the cutout portions of the other rotor magnetic pole member turned upside down such that the magnetic teeth of one of the rotor magnetic pole members have a phase difference of about T/2 with respect to the magnetic teeth of the other rotor magnetic pole member in a circumferential direction.

Preferably, each of the cutout portions provided on the inner circumferential surface or the outer circumferential surface of each of the rotor magnetic pole members may be deviated by about T/4 from a reference position, the cutout portions of one of the rotor magnetic pole members being deviated by about T/4 in a rotating direction from the magnetic teeth existing in the reference positions, respectively, the cutout portions of the other rotor magnetic pole member turned upside down being deviated by about T/4 in a counter-rotating direction from the magnetic teeth existing in the reference positions, respectively, and the rotor magnetic pole members being arranged such that the cutout portions of one of the rotor magnetic pole members are axially aligned with the cutout portions of the other rotor magnetic pole member.

Preferably, each of the rotor magnetic pole members may include first and second cutout portions provided on the inner circumferential surface or the outer circumferential surface thereof, the first and second cutout portions being arranged in the positions deviated by about (mT+T/2) where m is an integer equal to or larger than 1, the rotor magnetic pole members being arranged in a state that the first cutout portion of one of the rotor magnetic pole members is axially aligned with the second cutout portion of the other rotor magnetic pole member turned upside down.

With the hybrid rotary electrical machine of a preferred embodiment of the present invention, the cutout portions of one of the rotor magnetic pole members are axially aligned with the cutout portions of the other rotor magnetic pole member turned upside down such that the magnetic teeth of one of the rotor magnetic pole members have a phase difference of about T/2 with respect to the magnetic teeth of the other rotor magnetic pole member in a circumferential direction. Thus, the ease of assembly of the rotor can be significantly enhanced with a simplified configuration.

In particular, if the cutout portions provided on the inner circumferential surface or the outer circumferential surface of each of the rotor magnetic pole members are arranged in the positions deviated by about T/4 from an arbitrary reference position, the reference positions of the rotor magnetic pole members are deviated to one side and the other side in the rotating direction from the cutout portions by one quarter of the pitch of the magnetic teeth as the rotor magnetic pole members of the rotor element are arranged so that the cutout portions thereof can be axially aligned with each other. Thus, the reference positions of the rotor magnetic pole members are deviated from each other by one half of the pitch. Consequently, the magnetic teeth of the rotor magnetic pole members are deviated from each other by about one half of the pitch. Therefore, the magnetic teeth of the rotor magnetic pole members can be deviated from each other by about one half of the pitch only if the cutout portions of the rotor magnetic pole members are axially aligned with each other.

In the hybrid rotary electrical machine of the preferred embodiments of the present invention, if the first and second cutout portions are provided on the inner circumferential surface or the outer circumferential surface of the rotor magnetic pole members and the first and second cutout portions are arranged in the positions deviated by about (mT+T/2) where T is a pitch of a specified number of magnetic teeth (the pitch T corresponding to an angle between center portions of adjacent teeth of a rotor magnetic pole member) and m is an integer equal to or larger than 1, the magnetic teeth of the rotor magnetic pole members can be deviated from each other by about T/2 by axially aligning the first cutout portion of one of the rotor magnetic pole members with the second cutout portion of the other rotor magnetic pole member turned upside down. Thus, the ease of assembly of the rotor can be significantly enhanced with a simplified configuration.

The above and other elements, features, steps, characteristics and advantages of the present invention will become more apparent from the following detailed description of the preferred embodiments with reference to the attached drawings.

### BRIEF DESCRIPTION OF THE DRAWINGS

Fig. 1 is a front section view showing a hybrid stepping motor according to a first preferred embodiment of the present invention.

Fig. 2 is a plan view illustrating the relationship between a stator and a rotor of the stepping motor shown in Fig. 1.

Fig. 3 is a plan view illustrating a rotor magnetic pole member of the stepping motor shown in Fig. 1.

Fig. 4 is a plan view partially illustrating a pair of rotor magnetic pole members of the stepping motor shown in Fig. 1.

Fig. 5 is a front section view showing a hybrid stepping motor according to a second preferred embodiment of the present invention.

Fig. 6 is a plan view partially illustrating a rotor magnetic pole member of the stepping motor shown in Fig. 5.

Fig. 7 is a front section view showing a hybrid stepping motor according to a third preferred embodiment of the present invention.

Fig. 8 is a plan view illustrating a rotor magnetic pole member of the stepping motor shown in Fig. 7.

### DETAILED DESCRIPTION OF THE PREFERRED EMBODIMENTS

### First Preferred Embodiment

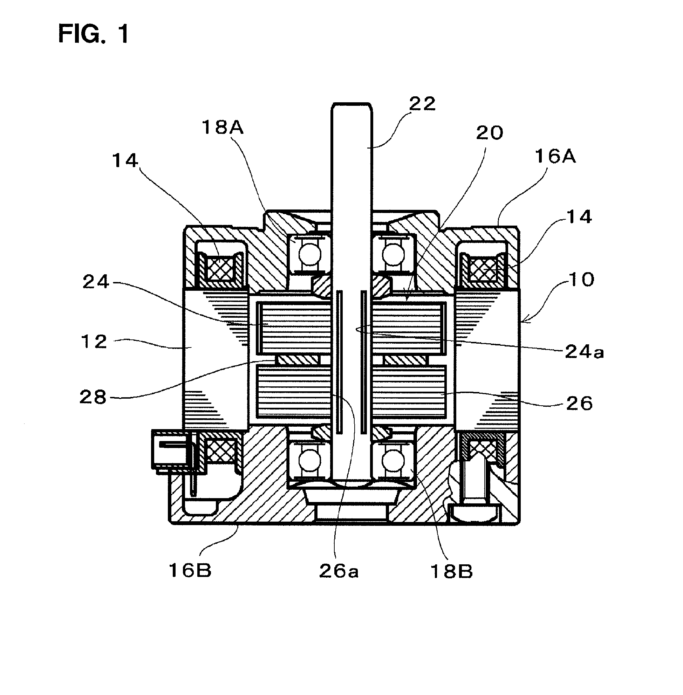

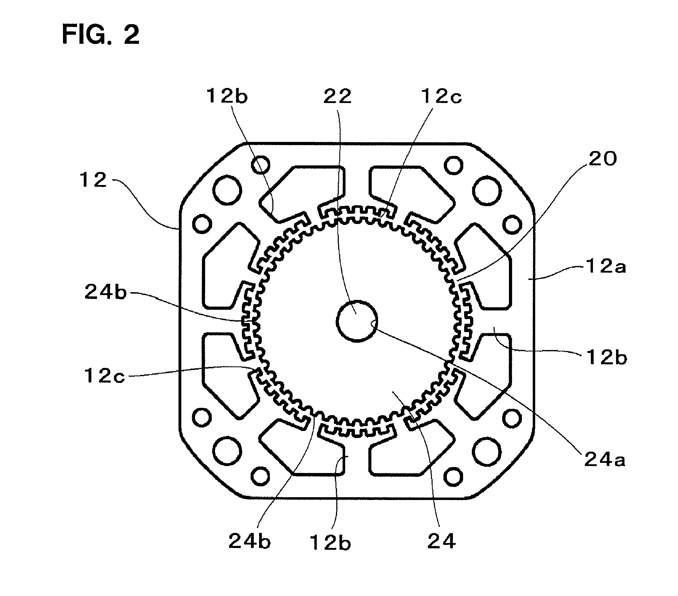

Fig. 1 shows a two-phase hybrid stepping motor as an inner-rotor-type hybrid rotary electrical machine according to a first preferred embodiment of the present invention. Fig. 2 is an axial view showing the combination of a stator preferably including eight main poles, for example, and a hybrid rotor used in the stepping motor. While not shown in Fig. 2, coils are wound on the necks of the eight main poles. The coils wound on four alternate main poles define a coil group corresponding to one phase and the coils wound on the remaining four main poles define a coil group corresponding to another phase, thereby providing two-phase coil groups as a whole. The stator preferably has an eight-main-pole structure which is free from an unbalanced electromagnetic force and superior in rapidity.

The stator 10 preferably includes a stator core 12 including a substantially rectangular ring-shaped core-back portion 12a and eight main poles 12b protruding radially inward from the core-back portion 12a. The main poles 12b are arranged at a regular interval in the circumferential direction. The stator 10 preferably further includes two-phase coils 14 wound on the respective main poles 12b. A plurality of (e.g., preferably six) inductor teeth 12c protrude from the tip end of each of the main poles 12b as coil winding poles. The stator core 12 is preferably defined by stacking a plurality of silicon steel plates (laminations) one above another, however, any other desirable type of stator could be used instead. Since the stator core 12 preferably has a shape with 90 degree rotational symmetry, the stator 10 can preferably be formed by stacking silicon steel plates sequentially rotated by 90 degrees, for example. If the rotor magnetic pole members are formed into a 90-degree-rotated lamination structure, it is possible to cancel or substantially cancel the difference in permeabilities of the silicon steel plate in a direction along which the silicon steel plate hoops is rolled and in another direction perpendicular or substantially perpendicular to the rolling direction. In addition, it is possible to reduce the sum of the thickness differences in the respective positions in the rolling direction of the laminations and in the direction perpendicular or substantially perpendicular to the rolling direction. This makes it possible to obtain a stator core having no or substantially no deviation in the circumferential dimensional accuracy and in the magnetic characteristics.

In the two-phase stator 10, four main poles 12b arranged on two mutually-orthogonal lines of the vertical and horizontal axes of the stator core 12 shown in Fig. 2, namely four main poles 12b arranged at an interval of 90 degrees, define a first-phase main pole group (for a A-phase and a C-phase). The remaining four main poles 12b arranged at an interval of 90 degrees in mechanical angle with respect to one another and at an interval of 45 degrees in mechanical angle with respect to the main poles 12b of the first-phase main pole group define a second-phase main pole group (for a B-phase and a D-phase). In the respective phases, the four main poles 12b arranged at an interval of 90 degrees are excited so that they can alternately become unlike poles when electric power is supplied to the coils 14.

Brackets 16A and 16B are preferably fixed to the axial opposite ends of the stator 1. A rotating shaft 22 of a rotor 20 arranged inside the stator core 12 is supported by bearings 18A and 18B held in the brackets 16A and 16B so that the rotating shaft 22 can rotate with respect to the stator 10.

The rotor 20 preferably includes a pair of disc-shaped rotor magnetic pole members 24 and 26 fixed to the rotating shaft 22 in an axially spaced-apart relationship and an axially-magnetized annular permanent magnet 28 interposed between the rotor magnetic pole members 24 and 26. The rotor magnetic pole members 24 and 26 are preferably fixed together by fitting the rotating shaft 22 to the center holes 24a and 26a of the rotor magnetic pole members 24 and 26. The rotor magnetic pole members 24 and 26 are preferably formed by stacking silicon steel plates (laminations) one above another, however, any other desirable type of rotor pole members could be used instead. On the outer circumferential surface of each of the rotor magnetic pole members 24 and 26, a plurality of (preferably 4n, where n is an integer equal to or larger than 1) magnetic teeth 24b or 26b is arranged at an equal pitch. The rotor magnetic pole members 24 and 26 are preferably staggered from each other by about one half of the pitch T of the magnetic teeth 24b or 26b.

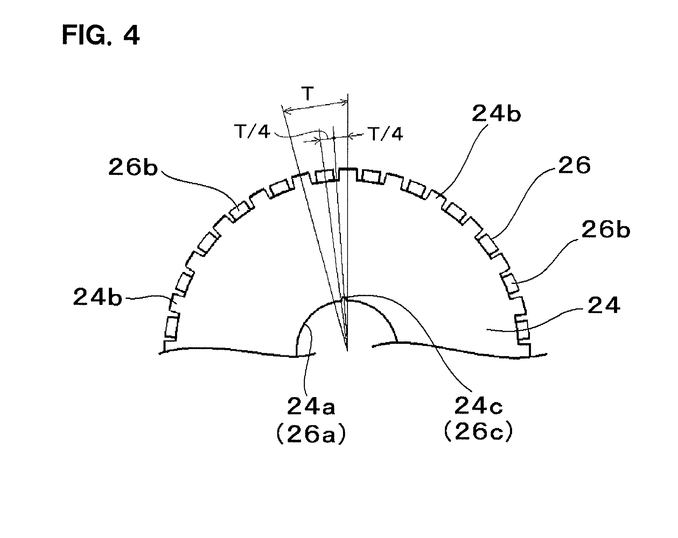

Figs. 3 and 4 schematically illustrate the rotor magnetic pole members 24 and 26 shown in Figs. 1 and 2. For the sake of increased understanding, the size of the center holes 24a and 24b and the number of the magnetic teeth 24b or 26b are shown to differ from the ones shown in Figs. 1 and 2.

As is apparent in Fig. 3, two cutout portions 24c are provided in the center hole 24a of the rotor magnetic pole member 24 in the 180-degree-rotated symmetry positions. If the pitch of the magnetic teeth 24b is assumed to be T (the pitch T corresponds to an angle between center portions of adjacent teeth of a rotor magnetic pole member), each of the cutout portions 24c is preferably provided in the position deviated counterclockwise by about T/4 from the center position of specified magnetic tooth 24b.

While only one rotor magnetic pole member 24 is illustrated in Fig. 3 for the sake of convenience, the other rotor magnetic pole member 26 has a similar structure. Two cutout portions 26c are provided in the center hole 26a of the rotor magnetic pole member 26 in the 180-degree-rotated symmetry positions. If the pitch of the magnetic teeth 26b is assumed to be T (the pitch T corresponds to an angle between center portions of adjacent teeth of a rotor magnetic pole member), each of the cutout portions 26c are preferably provided in the positions deviated by about T/4 counterclockwise from the center position of a specified magnetic tooth 26b. In this regard, the rotor magnetic pole member 26 is arranged within the rotary electrical machine in a state that the rotor magnetic pole member 26 is turned upside down. In the rotor magnetic pole member 26, therefore, each of the cutout portions 26c of the center hole 26a is preferably deviated by about one quarter of the pitch T clockwise from the center position of the corresponding specified magnetic tooth 26b.

As shown in Fig. 4, the rotor magnetic pole members 24 and 26 configured as above are coupled to the rotating shaft 22 in a state that the cutout portions 24c and 26c are axially aligned with each other. As a result, the magnetic teeth 24b of one rotor magnetic pole member 24 and the magnetic teeth 26b of the other rotor magnetic pole member 26 are deviated by about one half of the pitch T from each other. Accordingly, if the cutout portions 24c and 26c of the rotor magnetic pole members 24 and 26 are axially aligned with each other when assembling the rotor 20 through the use of the permanent magnet 28 interposed between the rotor magnetic pole members 24 and 26, it becomes possible to readily provide the rotor 20 having a desired configuration.

In the first preferred embodiment, description has been provided of the configuration of the stator core 12 in which the silicon steel plates are stacked in a 90-degree-rotated state, for example. If the number of the magnetic teeth of each of the rotor magnetic pole members of the rotor element is set equal to 4n (where n is an integer equal to or larger than 1) and if four cutout portions are arranged at an equal interval in the rotor magnetic pole members, it is possible to stack the laminations making up each of the rotor magnetic pole members in a sequentially 90-degree-rotated state. However, the present invention is not limited to this configuration. The rotation angle of the laminations may be appropriately selected depending on the specifications such as the number of protruding poles of the rotor.

### Second Preferred Embodiment

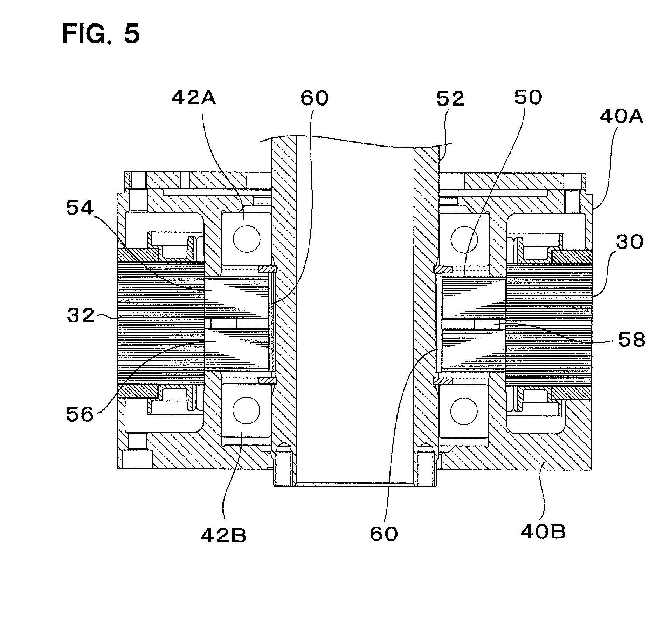

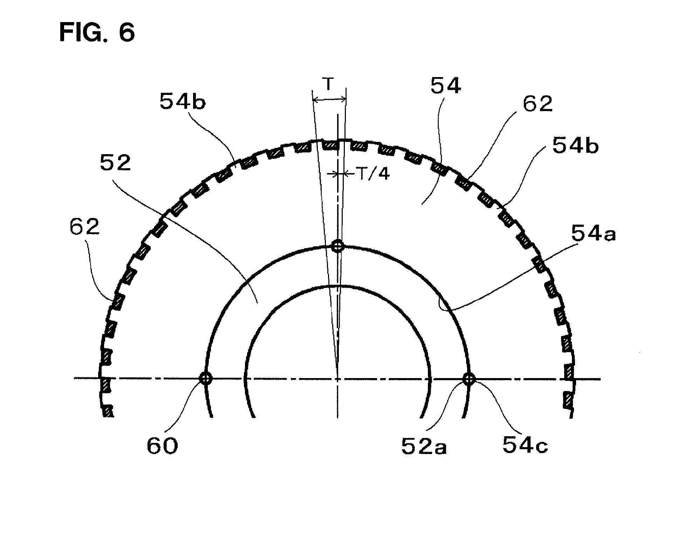

Next, a second preferred embodiment of the present invention will be described with reference to Figs. 5 and 6.

Fig. 5 shows a cross section of a three-phase hybrid stepping motor. As in the foregoing preferred embodiment, brackets 40A and 40B are arranged above and below a stator 30. A rotating shaft 52 of a rotor 50 arranged inside the stator 30 is supported by bearings 42A and 42B held in the brackets 40A and 40B so that the rotating shaft 52 can rotate with respect to the stator 30.

The stator 30 preferably includes a stator core 32. The stator core 32 preferably includes a back yoke having, e.g., an annular shape, and a plurality of main poles protruding radially inward from the back yoke. The main poles are arranged at a regular spacing in the circumferential direction. Three-phase coils are preferably wound on the respective main poles. A plurality of inductor teeth protrudes from the tip end of each of the main poles as coil winding poles. The stator core 32 is preferably defined by stacking a plurality of silicon steel plates one above another, however, any other desirable type of stator core could be used instead.

The rotor 50 includes a pair of rotor magnetic pole members 54 and 56 fixed to a rotating shaft 52 of hollow pipe shape in an axially spaced-apart relationship and an axially-magnetized disc-shaped permanent magnet 58 interposed between the rotor magnetic pole members 54 and 56. Each of the rotor magnetic pole members 54 and 56 is preferably provided by stacking a specified number of silicon steel plates (laminations) one above another, however, any other desirable type of rotor magnetic pole members could be used instead. As shown in Fig. 6, a center hole 54a fitted to the rotating shaft 52 is provided in the rotor magnetic pole member 54. A plurality of (4n, where n is an integer equal to or larger than 1) magnetic teeth 54b is provided on the outer circumferential surface of the rotor magnetic pole member 54. Similarly, the rotor magnetic pole member 56 preferably has a center hole and a plurality of magnetic teeth arranged at an equal pitch on the outer circumferential surface thereof. The rotor magnetic pole members 54 and 56 are staggered from each other by about one half of the pitch T of the magnetic teeth.

As shown in Fig. 6, four semicircular cutout portions 54c are preferably provided in the center hole 54a of the rotor magnetic pole member 54 at a regular interval, i.e., at an interval of 90 degrees. If the pitch of the magnetic teeth 54b is assumed to be T (the pitch T corresponds to an angle between center portions of adjacent teeth of a rotor magnetic pole member), each of the cutout portions 54c is arranged in an angular position deviated by about T/4 from a straight line passing through both the circumferential center of the magnetic tooth 54b which is the closest to the cutout portion 54c in the circumferential direction and the center of the rotor magnetic pole member 54. Similarly, four cutout portions are provided at a regular interval in the center hole of the rotor magnetic pole member 56. The angular position of each of the cutout portions is deviated by about T/4 from the reference magnetic tooth. On the outer circumferential surface areas of the rotating shaft 52 corresponding to the rotor magnetic pole members 54 and 56, a plurality of axially-extending semicircular grooves 52a is provided in an opposing relationship with the cutout portions 54c of each of the rotor magnetic pole members 54 and 56. The grooves 52a are arranged at four points at a regular interval along the circumferential direction.

The rotor magnetic pole members 54 and 56 are arranged in a state that one of the rotor magnetic pole members 54 and 56 is turned upside down and that the cutout portions of the rotor magnetic pole members 54 and 56 are axially aligned with each other. The permanent magnet 58 is interposed between the rotor magnetic pole members 54 and 56, in which state the rotor magnetic pole members 54 and 56 are fitted to the rotating shaft 52. The cutout portions of the rotor magnetic pole members 54 and 56 and the grooves 52a of the rotating shaft 52 are opposed to each other. Pins 60 are inserted into the axial holes defined by the cutout portions and the grooves 52a. Thus, the rotor magnetic pole members 54 and 56 are coupled to the rotating shaft 52. At this time, the rotor magnetic pole members 54 and 56 are arranged in a state that one of the rotor magnetic pole members 54 and 56 is turned upside down and that the cutout portions of the rotor magnetic pole members 54 and 56 are aligned with each other. Consequently, the magnetic teeth of the rotor magnetic pole members 54 and 56 are deviated from each other by about one half of the pitch T. This makes it possible to readily align the positions of the rotor magnetic pole members 54 and 56.

In the second preferred embodiment, auxiliary magnets 62 are embedded between the magnetic teeth of each of the rotor magnetic pole members 54 and 56. The auxiliary magnets 62 are preferably axially-extending rod-shaped magnets and are fixedly secured between the magnetic teeth preferably through the use of, for example, an adhesive agent so as not to protrude outward beyond the magnetic teeth. The auxiliary magnets 62 are magnetized in the radial direction, i.e., in the thickness direction. The auxiliary magnets 62 are configured to have outwardly-facing magnetic poles opposite to the magnetic poles of the magnetic teeth of the rotor magnetic pole members 54 and 56 magnetized by the permanent magnet 58. This makes it possible to increase the magnetic force generated in the magnetic teeth of the rotor magnetic pole members 54 and 56 and to obtain high torque.

In the second preferred embodiment, the rotor element is preferably defined by a pair of rotor magnetic pole members and a permanent magnet interposed between the rotor magnetic pole members. Alternatively, there may be provided a plurality of rotor elements each including a pair of rotor magnetic pole members and a permanent magnet interposed between the rotor magnetic pole members. The rotors may be coupled to a common rotating shaft, thereby providing a rotor. In that case, the permanent magnets of the rotor elements are magnetized in the opposite directions and the circumferential positions of the magnetic teeth of the adjoining rotor magnetic pole members are axially aligned with each other.

### Third Preferred Embodiment

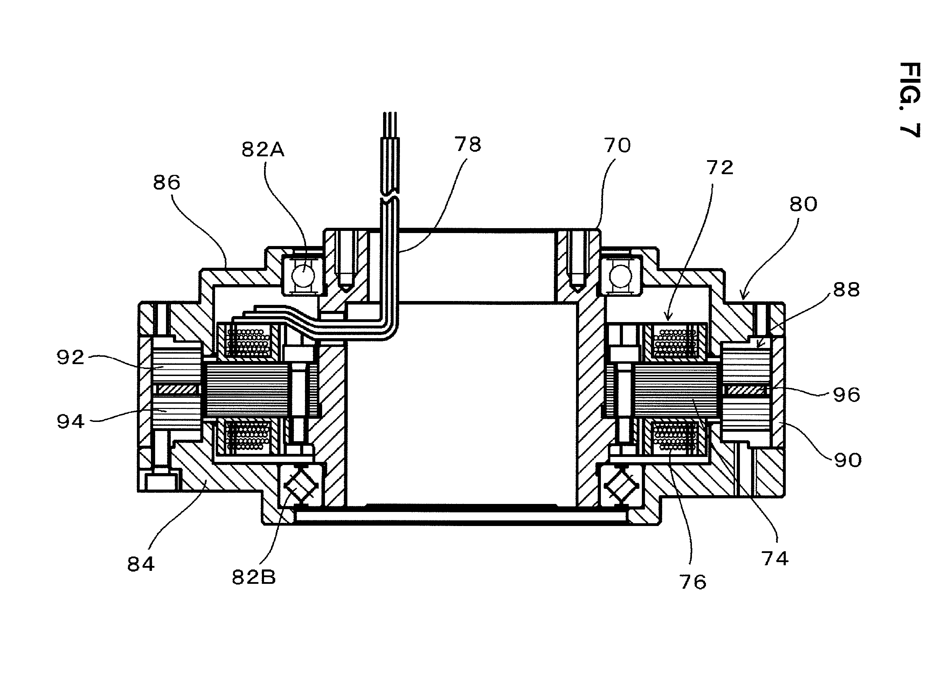

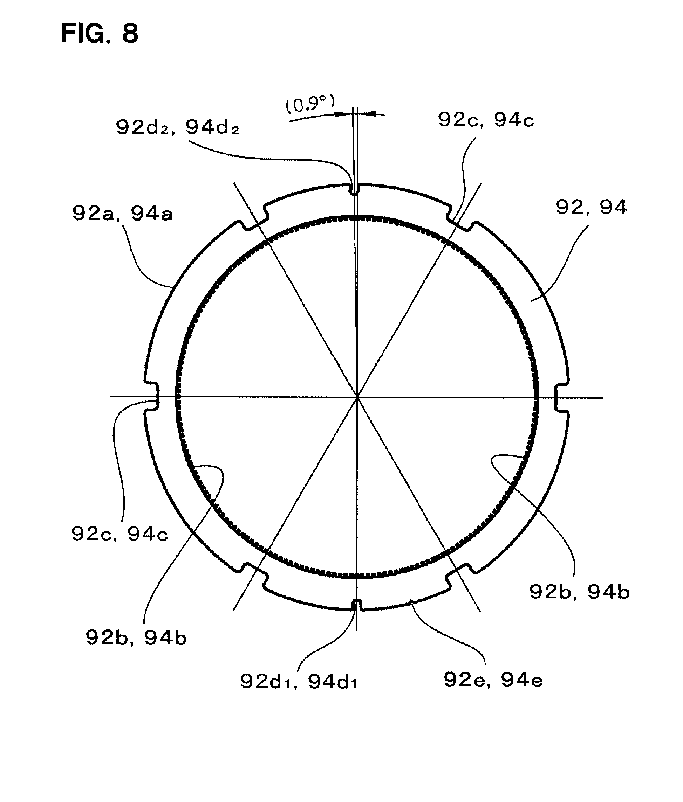

Next, a third preferred embodiment of the present invention will be described with reference to Figs. 7 and 8. While the first and second preferred embodiments are all directed to an inner-rotor-type hybrid stepping motor, the third preferred embodiment pertains to an outer-rotor-type hybrid stepping motor.

A stator 72 is fixed to a hollow cylindrical fixed shaft 70. The stator 72 preferably includes a stator core 74 threadedly fixed to the outer circumferential surface of the middle portion of the fixed shaft 70 and coils 76 wound on the stator core 74. The stator core 74 preferably includes an annular back yoke and a plurality of main poles protruding radially outward from the back yoke. The main poles are arranged at a regular interval along the circumferential direction. Three-phase coils 76 are preferably wound on the respective main poles. A plurality of inductor teeth is preferably provided at the tip end of each of the main poles as coil winding poles. The stator core 74 is preferably provided by stacking a plurality of silicon steel plates one above another, however, any other type of stator core could be used instead. Lead wires 78 are preferably connected to the end portions of the three-phase coils 76 and are guided into the fixed shaft 70. After passing through the inside of the fixed shaft 70, the lead wires 78 are preferably connected to a control circuit (not shown).

A rotating body 80 surrounding the stator 72 is rotatably supported on the fixed shaft 70 by a pair of bearings 82A and 82B. The rotating body 80 preferably includes a rotating base portion 84 arranged to cover the lower portion of the stator 72 and supported by the bearing 82B, a rotating cover portion 86 arranged to cover the upper portion of the stator 72 and supported by the bearing 82A and a rotor 88 interposed between the outer peripheries of the rotating base portion 84 and the rotating cover portion 86 and radially opposed to the stator 72 with an air gap left therebetween.

The rotor 88 preferably includes a pair of rotor magnetic pole members 92 and 94 fixed to the inner surface of a rotor case 90 in an axially spaced-apart relationship and an axially-magnetized disc-shaped permanent magnet 96 interposed between the rotor magnetic pole members 92 and 94. Each of the rotor magnetic pole members 92 and 94 is preferably provided by stacking a specified number of silicon steel plates (laminations) one above another, however, any other desirable type of rotor magnetic pole member could be provided instead. As shown in Fig. 8, the outer circumferential surfaces 92a and 94a of the rotor magnetic pole members 92 and 94 are preferably fitted to the inner circumferential surface of the rotor case 90. On the inner circumferential surface of each of the rotor magnetic pole members 92 and 94, a plurality of (preferably 4n, where n is an integer equal to or larger than 1) magnetic teeth 92b or 94b is arranged at an equal pitch.

On the outer circumferential surface of each of the rotor magnetic pole members 92 and 94, screw guide holes 92c and 94c are preferably provided at an equal interval of 60 degrees. Screws arranged to tighten the rotating base portion 84 and the rotating cover portion 86 together are inserted through the screw guide holes arranged between the screw guide holes 92c and 94c and the rotor case 84 such that the rotating base portion 84, the rotating cover portion 86 and the rotor 88 are combined together to define the rotating body 80.

On the outer circumferential surface of each of the rotor magnetic pole members 92 and 94, first cutout portions 92d₁ and 94d₁ and second cutout portions 92d₂ and 94d₂ are provided in the substantially 180-degree spaced-apart symmetrical positions. The first cutout portions 92d₁ and 94d₁ are preferably arranged in alignment with the reference positions of specified magnetic teeth 92b and 94b provided on the inner circumferences of the rotor magnetic pole members 92 and 94. The second cutout portions 92d₂ and 94d₂ are preferably arranged in the positions deviated by one half of the pitch T of the rotor magnetic pole members 92 and 94 from the reference positions of the specified magnetic teeth 92b and 94b. In other words, the first cutout portions 92d₁ and 94d₁ and the second cutout portions 92d₂ and 94d₂ are preferably arranged to have a phase difference of about mT+T/2, where m is an integer equal to or larger than 1.

The rotor magnetic pole members 92 and 94 are arranged in a state that one of the rotor magnetic pole members 92 and 94 are turned upside down and that the first cutout portion 92d₁ (94d₁) of the rotor magnetic pole member 92 (94) is axially aligned with the second cutout portion 94d₂ (92d₂) of the rotor magnetic pole member 94 (92). The rotor magnetic pole members 92 and 94 are fixed to the rotor case 90 with a magnet 96 interposed therebetween. As a result, the magnetic teeth 92b and 94b of the rotor magnetic pole members 92 and 94 are deviated from each other by T/2.

In the third preferred embodiment, as shown in Fig. 8, alignment marks 92e and 94e are preferably provided near the first cutout portions 92d₁ and 94d₁. The alignment marks 92e and 94e are used to align the stacking positions when providing the rotor magnetic pole members 92 and 94 by stacking a plurality of silicon steel plates (laminations) one above another. By using the alignment marks 92e and 94e as markers, it is possible to recognize the right positional relationship of the rotor magnetic pole members 92 and 94. In other words, it is assumed that the alignment marks 92e and 94e are provided in the position 15 degrees deviated from the first cutout portions 92d₁ and 94d₁ in the rotating direction. If one of the rotor magnetic pole members 92 and 94 are turned upside down and then if the first cutout portion 92d₁ (94d₁) of the rotor magnetic pole member 92 (94) is axially aligned with the second cutout portion 94d₂ (92d₂) of the rotor magnetic pole member 94 (92), the alignment mark 92e of the rotor magnetic pole member 92 and the alignment mark 94e of the rotor magnetic pole member 94 are arranged with a phase difference of 150 degrees. Accordingly, the right combination of the rotor magnetic pole members 92 and 94 can be recognized from the positional relationship of the alignment marks 92e and 94e.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A hybrid rotary electrical machine, comprising:
a stator including a stator core including an annular core-back portion and a plurality of main poles radially protruded from the core-back portion, each of the main poles including a plurality of inductor teeth provided at a tip end thereof, the stator further including multi-phase coils wound on the main poles of the stator core; and
a rotor including one or more rotor elements including a pair of annular rotor magnetic pole members made of a magnetic material and an axially-magnetized annular permanent magnet interposed between the annular rotor magnetic pole members, the rotor magnetic pole members being rotatably arranged with respect to the stator with a radial air gap provided therebetween; wherein
each of the rotor magnetic pole members includes a specified number of magnetic teeth arranged at an equal pitch T, the pitch T corresponding to an angle between center portions of adjacent teeth on the rotor magnetic pole members, on an inner circumferential surface or an outer circumferential surface thereof facing the stator, the rotor magnetic pole members being arranged such that the magnetic teeth of one of the rotor magnetic pole members are deviated by about T/2 from the magnetic teeth of the other rotor magnetic pole member;
each of the rotor magnetic pole members includes cutout portions provided on the inner circumferential surface or the outer circumferential surface of each of the rotor magnetic pole members in a specified positional relationship with respect to the magnetic teeth; and
the cutout portions of one of the rotor magnetic pole members are axially aligned with the cutout portions of the other rotor magnetic pole member turned upside down such that the magnetic teeth of one of the rotor magnetic pole members have a phase difference of about T/2 with respect to the magnetic teeth of the other rotor magnetic pole member in a circumferential direction.

2. The machine of claim 1, wherein each of the cutout portions provided on the inner circumferential surface or the outer circumferential surface of each of the rotor magnetic pole members is deviated by about T/4 from a reference position, the cutout portions of one of the rotor magnetic pole members being deviated by about T/4 in a rotating direction from the magnetic teeth existing in the reference positions, respectively, the cutout portions of the other rotor magnetic pole member turned upside down being deviated by about T/4 in a counter-rotating direction from the magnetic teeth existing in the reference positions, respectively, and the rotor magnetic pole members being arranged such that the cutout portions of one of the rotor magnetic pole members are axially aligned with the cutout portions of the other rotor magnetic pole member.

3. The machine of claim 2, wherein the magnetic teeth of each of the rotor magnetic pole members of the rotor element are an even number, the cutout portions of each of the rotor magnetic pole members being an even number equal to or larger than 2 and uniformly distributed.

4. The machine of claim 2, wherein each of the rotor magnetic pole members includes a plurality of laminations stacked one above another, each of the laminations including a specified number of the magnetic teeth and a specified number of the cutout portions, each of the rotor magnetic pole members including the laminations stacked one above another with the cutout portions of the laminations aligned with each other, the rotor magnetic pole members being arranged such that the cutout portions thereof are axially aligned in a state that one of the rotor magnetic pole members is turned upside down.

5. The machine of claim 2, wherein the rotor includes a rotating member fitted to an inner circumferential surface or an outer circumferential surface of the rotor element so as to rotate together with the rotor element, the rotating member including grooves provided on an outer circumferential surface of the rotating member in a corresponding relationship with the cutout portions, the rotor magnetic pole members being coupled to the rotating member by fitting pins into axial holes defined by the grooves and the cutout portions.

6. The machine of claim 2, wherein the rotor includes a plurality of the rotor elements arranged concentrically and integrally, two of the rotor elements adjoining to each other including permanent magnets magnetized in the opposite directions, two of the rotor elements adjoining to each other being arranged such that the circumferential positions of the magnetic teeth of the adjoining rotor magnetic pole members are axially aligned with other.

7. The machine of claim 1, wherein each of the rotor magnetic pole members includes first and second cutout portions provided on the inner circumferential surface or the outer circumferential surface thereof, the first and second cutout portions being arranged in the positions deviated by about (mT+T/2) where m is an integer equal to or larger than 1, the rotor magnetic pole members being arranged in a state that the first cutout portion of one of the rotor magnetic pole members is axially aligned with the second cutout portion of the other rotor magnetic pole member turned upside down.

8. The machine of claim 7, wherein the first and second cutout portions of each of the rotor magnetic pole members are arranged in or substantially in 180-degree spaced-apart symmetrical positions.

9. The machine of claim 7, wherein each of the rotor magnetic pole members includes an alignment mark arranged to enable a user to identify the first cutout portion or the second cutout portion.
